# FASCICULE DE BREVET EUROPEEN

(11) **EP 0 815 378 B1**
(45) Date de publication et mention de la délivrance du brevet: **12.09.2001**
(21) Numéro de dépôt: 96943183.2
(22) Date de dépôt: 23.12.1996
(51) Int. Cl.: F16L 33/22, F16L 33/00

(54) **Raccordement d'une canalisation flexible**
Verbindung einer biegsamen Rohrleitung
Connection of a flexible pipe

(30) Priorité: 11.01.1996 FR 9600249
(43) Date de publication de la demande: 07.01.1998
(73) Titulaire: COFLEXIP, 75116 Paris (FR)
(72) Inventeur: SECHER, Philippe, F-76250 Déville-lès-Rouen (FR); BUON, Eric, F-76130 Mont-Saint-Aignan (FR)
(74) Mandataire: Levy, David
(86) Numéro de dépôt international: FR9602067
(87) Numéro de publication internationale: WO9725564

(56) Documents cités:
- DE-B- 1 264 185
- FR-A- 2 512 165
- GB-A- 718 830
- US-A- 3 415 545
- US-A- 4 143 892

## Description

La présente invention concerne le domaine des canalisations flexibles de transport d'hydrocarbures, et notamment mais non exclusivement, celui des canalisations flexibles de transport d'hydrocarbures chauds (de température typiquement supérieure à 80°C) telles que celles utilisées pour la remontée de bruts de gisement depuis des têtes de puits sous-marines vers la surface, notamment vers des plate-formes d'exploitation pétrolière.

Une canalisation flexible est constituée par une conduite flexible ou par des conduites flexibles raccordées entre elles, la ou chacune des conduites flexibles étant munie à ses extrémités d'embouts de connexion.

Une conduite flexible comporte de façon connue en soi, depuis le centre vers l'extérieur :
- une armure de résistance à l'écrasement, non étanche, encore appelée carcasse interne, typiquement constituée par l'enroulement hélicoïdal d'un profilé agrafé, par exemple un feuillard d'acier, munie à chaque extrémité d'un embout d'extrémité encore appelé bague d'arrêt,
- une couche polymérique recouvrant ladite carcasse interne, qui pénètre dans les interstices de cette dernière et présente une surface externe sensiblement cylindrique et régulière, cette couche polymérique étant encore appelée sous-couche sacrificielle,
- une barrière d'étanchéité constituée d'une couche polymérique extrudée sur ladite sous-couche sacrificielle, cette dernière ayant pour but de fournir à la barrière d'étanchéité une surface d'appui sensiblement régulière,
- un ensemble d'armatures destinées à résister aux efforts mécaniques, notamment à la pression interne et à la traction, comportant typiquement des nappes d'armures croisées de fils d'acier enroulés en hélice, et
- une gaine polymérique externe de protection.

Eventuellement, la conduite comporte en outre, entre la barrière d'étanchéité et les nappes d'armures, une couche polymérique, encore appelée couche d'antifluage, recouvrant ladite barrière d'étanchéité et destinée à éviter le fluage de cette dernière dans les disjoints des nappes d'armure.

La conduite flexible doit être fixée à chaque embout de connexion de manière à permettre à la fois la continuité de l'étanchéité de la canalisation flexible et la reprise des efforts de traction dus à l'effet de fond. Ces efforts sont totalement repris par les nappes d'armures de façon connue en soi comme décrit plus loin.

Il est connu d'assurer l'étanchéité entre l'embout et la barrière d'étanchéité au moyen d'un joint d'étanchéité constitué par une douille métallique, présentant une surface extérieure sensiblement conique, enfilée et sertie sur la barrière d'étanchéité. La douille métallique retient en outre axialement la barrière d'étanchéité dans l'embout de connexion, en s'opposant aux contraintes résiduelles axiales dues au procédé spécifique de fabrication de la conduite flexible. La barrière d'étanchéité est pincée entre la douille métallique et la carcasse interne, celle-ci présentant une résistance mécanique suffisante pour résister au sertissage de la douille métallique.

Cette façon connue de procéder n'offre toutefois pas entière satisfaction car l'on a constaté dans certains cas une perte d'étanchéité due à une diminution du serrage exercé par la douille métallique, dont la société déposante a attribué l'origine à l'exsudation de plastifiants contenus dans le matériau constituant la barrière d'étanchéité.

Une augmentation du taux de sertissage de la douille, défini comme étant le rapport de l'épaisseur de pénétration de la douille métallique aux épaisseurs combinées de la barrière d'étanchéité et de la sous-couche sacrificielle avant sertissage, ne permet pas d'obtenir de façon satisfaisante une étanchéité durable car un taux de sertissage trop élevé (supérieur à 60%) accroît les risques de déchirure de la barrière d'étanchéité.

L'invention a pour objet de remédier aux inconvénients précités en proposant un nouvel assemblage d'un embout de connexion et d'une conduite flexible de transport d'hydrocarbures, cette conduite étant du type comportant une carcasse interne, une sous-couche sacrificielle et une barrière d'étanchéité.

L'invention a notamment pour objet d'assurer de façon durable l'étanchéité entre la conduite flexible et l'embout de connexion.

L'invention est définie par les caractéristiques de la revendication 1.

Elle parvient aux objets précipités par le fait que l'embout comporte une bague de retenue solidaire de la carcasse interne et des moyens de blocage s'opposant à un déplacement axial de la bague de retenue dans le sens d'un désassemblage de la conduite et de l'embout.

L'invention repose sur la constatation que l'exsudation des plastifiants de la barrière d'étanchéité n'est pas la seule cause de la diminution du serrage exercé par la douille métallique d'étanchéité.

La société déposante a constaté que, de façon inattendue, la sous-couche sacrificielle avait tendance, dans les embouts de connexion connus, à glisser par rapport à la barrière d'étanchéité sous l'effet des contraintes d'origine thermique, telles que provoquées par des variations alternées de températures, de sorte qu'au-delà d'une certaine course de déplacement de la sous-couche sacrificielle, la barrière d'étanchéité n'était plus serrée convenablement entre la douille métallique d'étanchéité et la carcasse interne. Les contraintes d'origine thermique précitées peuvent être considérables.

Grâce à l'invention, la sous-couche sacrificielle qui est intimement liée à la carcasse interne, du fait de la pénétration de la matière la constituant dans les interstices de la carcasse interne, est bloquée axialement dans l'embout et ne peut se déplacer. On obtient ainsi une étanchéité durable entre la conduite flexible et l'embout de connexion.

Le blocage axial de la carcasse interne peut s'effectuer de diverses manières sans sortir du cadre de l'invention.

Selon un premier mode de réalisation, la bague de retenue est munie d'un logement ouvert vers l'extérieur et cette bague de retenue est bloquée axialement par rapport au corps de l'embout par un organe solidaire du corps de l'embout et introduit dans ledit logement.

Selon un deuxième mode de réalisation, avantageusement combiné avec le premier, le blocage axial de la carcasse interne s'effectue par l'intermédiaire d'une canule insérée par une extrémité entre la sous-couche sacrificielle et la barrière d'étanchéité, venant buter axialement à l'autre extrémité contre la bague de retenue. La canule provoque une expansion radiale de la barrière d'étanchéité et elle est retenue axialement dans le corps de l'embout au moyen d'une contre-forme solidaire du corps de l'embout et définissant par rapport à l'extrémité expansée de la barrière d'étanchéité un rétrécissement de section, encore appelé "dog leg", s'opposant au retrait axial de la portion de la barrière d'étanchéité engagée sur ladite canule.

Avantageusement, on choisit la longueur de la canule de telle sorte que ladite barrière d'étanchéité soit comprimée entre la canule et la contre-forme et l'on choisit de préférence le positionnement axial relatif de la canule et de la contre-forme de manière à obtenir un taux de compression de la barrière d'étanchéité compris entre 5 et 20%.

Avantageusement, l'extrémité de la canule située du côté de la contre-forme est délimitée radialement à l'extérieur par une surface conique, dont l'angle au sommet est de préférence compris entre 3 et 30°.

Avantageusement, le taux de sertissage de la douille métallique d'étanchéité sur la barrière d'étanchéité est compris entre 5 et 60% et de préférence entre 10 et 40%.

L'invention a encore pour objet un embout destiné à équiper une canalisation flexible telle que précitée.

D'autres caractéristiques et avantages de la présente invention ressortiront à la lecture de la description qui va suivre, d'exemples de réalisation non limitatifs de l'invention, et à l'examen du dessin annexé sur lequel :
- la figure 1 est une coupe axiale, schématique et partielle, d'une extrémité de canalisation flexible de type "rough bore" conforme à l'art antérieur,
- la figure 2 est une vue illustrant la notion de taux de sertissage,
- la figure 3 est une vue schématique, en coupe axiale, partielle, d'une extrémité de canalisation flexible conforme à un premier exemple de réalisation de l'invention,
- la figure 4 est une vue schématique, en coupe axiale, partielle, d'une extrémité de canalisation flexible conforme à un deuxième exemple de réalisation de l'invention,
- la figure 5 est une vue schématique, en coupe axiale, partielle, d'une extrémité de canalisation flexible conforme à un troisième exemple de réalisation de l'invention, et
- la figure 6 correspond à une variante de réalisation de la canalisation flexible représentée sur la figure 5.

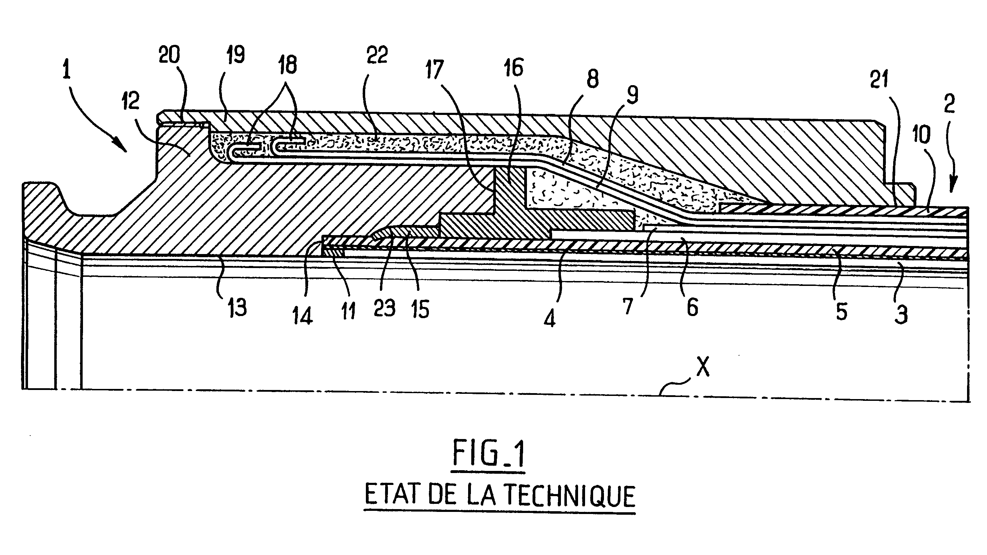

On a représenté sur la figure 1 une extrémité d'une canalisation flexible conforme à l'état de la technique, comportant un embout de connexion 1 réalisé de façon connue en soi à l'extrémité d'une conduite flexible 2.

Dans toute la description qui suit on emploiera les termes "avant" et "arrière" en référence à des zones respectivement situées du côté de l'embout 1 et du côté de la conduite 2.

La conduite 2 est d'un type connu, et elle est fabriquée et commercialisée en grandes longueurs par la société déposante.

Elle comporte successivement, depuis le centre vers l'extérieur, une carcasse interne 3, une sous-couche sacrificielle 4, une barrière d'étanchéité 5, une armure 6 de résistance à la composante circonférentielle de la pression interne, une couche anti-frottement 7, une armure de résistance à la traction, constituée de nappes croisées 8,9, et une couche externe de protection 10.

La carcasse interne 3 est typiquement constituée par un feuillard métallique agrafé. Elle est munie à son extrémité d'une bague d'arrêt 11.

La sous-couche sacrificielle 4 est extrudée sur la carcasse interne de sorte que le matériau dans laquelle elle est réalisée s'insère dans les interstices du feuillard agrafé constituant cette dernière. La sous-couche sacrificielle 4 est avantageusement réalisée de façon connue en soi en un polymère de PVDF capable de résister à des températures supérieures à 100°C.

La sous-couche sacrificielle 4 présente en outre une surface externe sensiblement lisse et cylindrique de révolution autour de l'axe longitudinal de la conduite, sur laquelle est extrudée la barrière d'étanchéité 5 sans être intimement liée à la carcasse interne 3, donc sans risque d'endommagement en cours de service par cette dernière. La barrière d'étanchéité 5 est avantageusement réalisée de façon connue en soi en un polymère de PVDF capable de résister à des températures supérieures à 100°C.

L'armure 6 est réalisée de façon connue en soi par l'enroulement d'une ou plusieurs couches de rubans métalliques agrafés.

Les nappes d'armure 8 et 9 sont typiquement enroulées de façon connue en soi avec des angles d'enroulement compris entre 30 et 55°, en fonction de la résistance à la pression interne souhaitée.

L'embout de connexion 1 comporte un corps 12 métallique, encore appelé "voûte", définissant un passage central 13, cylindrique de révolution autour d'un axe longitudinal X. Ce passage central 13 présente un épaulement 14 pour servir de butée à la bague d'arrêt 11 de la carcasse interne 3, et à la barrière d'étanchéité 5.

L'étanchéité entre la barrière d'étanchéité 5 et le corps 12 de l'embout est obtenue au moyen d'une douille métallique d'étanchéité 15 sertie sur la barrière d'étanchéité et retenue axialement dans l'embout au moyen d'une bague 16, qui s'emboîte dans le corps 12 de l'embout à l'extrémité arrière 17 de celui-ci et ménage un espace annulaire avec la barrière d'étanchéité 5 dans lequel est insérée l'armure 6.

Les nappes d'armure 8, 9 recouvrent extérieurement le corps 12 et présentent chacune à leur extrémité avant 18 des rebroussements formant crochet, répartis angulairement autour de l'axe longitudinal X et améliorant la fixation au corps 12 de l'embout, comme cela sera précisé dans la suite.

Un capot tubulaire 19 rapporté sur le corps 12 est raccordé à son extrémité avant 20 sur ce dernier et présente à l'autre extrémité un passage 21 pour la conduite flexible 2.

Le capot 19 définit à l'intérieur de l'embout de connexion 1, avec le corps 12, un volume annulaire 22 dans lequel s'étendent les extrémités avant des nappes 8, 9. Ce volume annulaire 22 est rempli d'une résine polymérique thermodurcissable permettant de solidariser les nappes 8,9 et le corps 12 afin d'assurer la transmission des efforts axiaux de traction entre la conduite flexible 2 et l'embout de connexion 1.

Dans la canalisation flexible connue et telle que représentée sur la figure 1, l'étanchéité entre la barrière d'étanchéité 5 et le corps 12 est obtenue au moyen de la douille 15 qui vient écraser par sa surface interne la barrière d'étanchéité 5. Cette dernière se trouve ainsi pincée entre la douille 15 et la carcasse interne 3.

La douille 15 peut bien entendu présenter des formes diverses,l'important étant d'obtenir une continuité de l'étanchéité avec le corps de l'embout. Dans l'exemple décrit, la douille 15 coopère avec un logement annulaire 23 de forme conique convergeant vers l'avant, de sorte qu'elle est déformée au contact du corps de l'embout lorsqu'elle est poussée axialement vers l'avant dans le corps 12 pour s'enfoncer dans la barrière d'étanchéité 5.

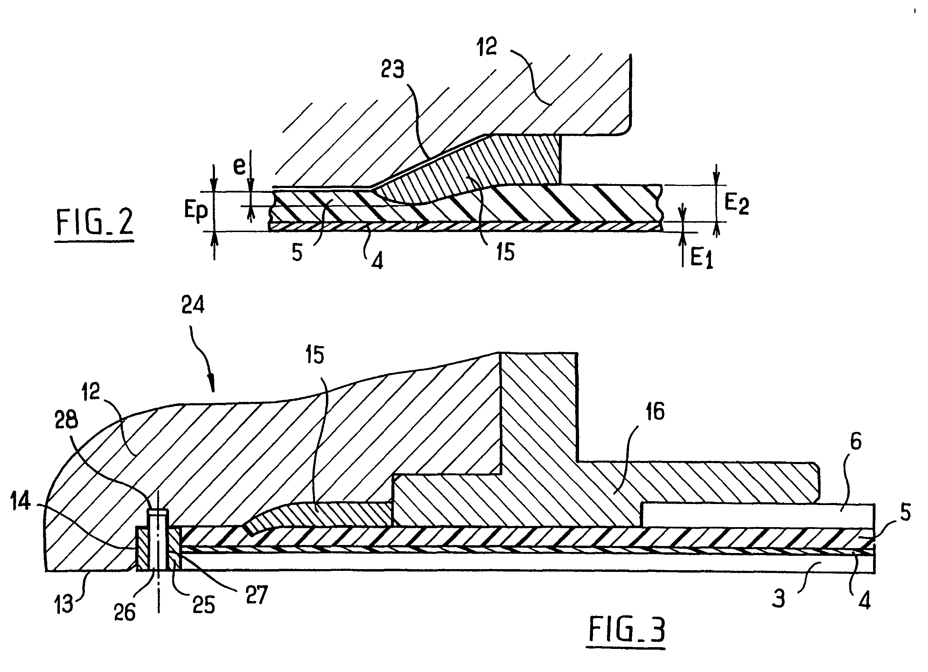

On définit le taux de sertissage de la douille 15 comme étant le rapport e/Eₚ, où e désigne l'épaisseur de pénétration de la douille 15 et E _{P} l'épaisseur de la sous-couche sacrificielle 4 et de la barrière d'étanchéité 5, soit Eₚ = E₁+E₂ dans l'exemple de la figure 2, où E₁ désigne l'épaisseur de la sous-couche sacrificielle 4 et E₂ l'épaisseur de la barrière d'étanchéité 5.

On a représenté sur la figure 3 l'extrémité d'une canalisation flexible conforme à un premier exemple de réalisation de l'invention. Cette canalisation comporte un embout de connexion 24 à l'extrémité d'une conduite flexible dont on n'a représenté dans un souci de clarté du dessin que la carcasse interne 3, la sous-couche sacrificielle 4, la barrière d'étanchéité 5 et l'armure 6. La carcasse interne 3 est munie à son extrémité d'une bague de retenue 25 formant saillie radialement vers l'extérieur sur la surface externe de la carcasse interne 3. La bague de retenue 25 peut être fixée directement sur le feuillard agrafé de la carcasse interne 3, auquel cas elle sert également de bague d'arrêt ou être rapportée en variante sur une bague d'arrêt sous-jacente fixée de manière connue en soi à l'extrémité avant de la carcasse interne 3.

Conformément à un premier mode de réalisation de l'invention, la bague de retenue 25 de la carcasse interne 3 est reçue dans le corps 12 de l'embout jusqu'à buter par sa tranche avant contre l'épaulement 14 et elle est bloquée axialement à l'intérieur du corps 12 de l'embout de connexion 24 au moyen de goujons 26 répartis angulairement autour de l'axe longitudinal de l'embout, introduits chacun à une extrémité dans un perçage radial 27 ménagé dans la bague de retenue 25 et à l'autre extrémité dans un perçage 28 réalisé dans le corps 12. Hormis le blocage axial de la carcasse interne 3 dans le corps 12, l'embout de connexion 24 est identique pour le restant à celui qui a été décrit en référence à la figure 1 et n'a par conséquent pas été représenté dans son ensemble.

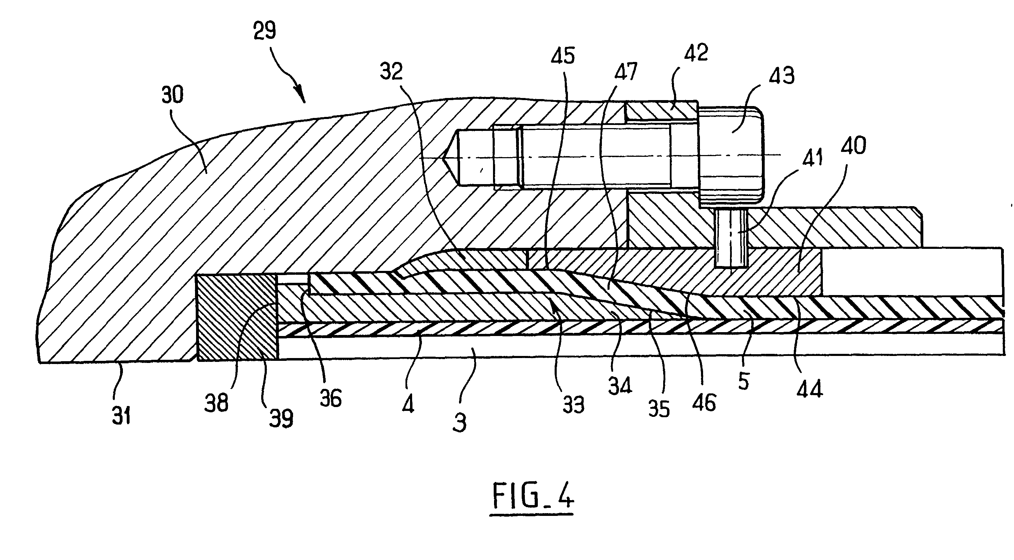

On a représenté sur la figure 4 un embout de connexion 29 conforme à un deuxième mode de réalisation de l'invention.

L'embout 29 comporte un corps 30 métallique définissant un passage central 31 pour les fluides, cylindrique de révolution autour de l'axe longitudinal de l'embout.

On n'a représenté sur la figure 4 que la partie la plus radialement interne du corps 30 de l'embout, dans laquelle sont insérées la carcasse interne 3, la sous-couche sacrificielle 4 et la barrière d'étanchéité 5, le reste du corps 30 de l'embout étant connu en lui-même.

Une douille métallique d'étanchéité 32, identique à la douille 15 précédemment décrite, est immobilisée axialement dans le corps 30 comme cela sera décrit plus loin et écrase localement la barrière d'étanchéité 5 pour obtenir l'étanchéité entre la conduite flexible et l'embout, à l'instar de ce qui a été décrit en référence à la figure 1.

Un insert tubulaire 33, encore appelé canule, est engagé entre la sous-couche sacrificielle 4 et la barrière d'étanchéité 5.

Cette canule 33 comporte, dans l'exemple de réalisation représenté sur la figure 4, une partie médiane cylindrique tubulaire. Elle présente une surface interne uniformément cylindrique de révolution sur toute sa longueur, une extrémité arrière 34 effilée en biseau, délimitée à l'extérieur par une surface conique 35 d'angle au sommet compris entre 3° et 30°. La canule 30 est épaulée extérieurement à l'extrémité avant pour définir une butée 36 pour la barrière d'étanchéité 5.

Le rayon de la surface interne de la canule 33 est adapté au montage sur la sous-couche sacrificielle 4 recouvrant la carcasse interne 3.

La canule 33 bute axialement par sa tranche d'extrémité avant contre la face arrière 38 d'une bague de retenue 39 solidaire de l'extrémité avant de la carcasse interne.

L'embout comporte une contre-forme 40 qui est immobilisée axialement dans le corps 30 au moyen de goujons 41 répartis angulairement autour de l'axe longitudinal de l'embout. Chaque goujon 41 vient en prise d'une part dans une pièce annulaire de retenue 42 fixée par des boulons 43 à l'arrière du corps 30 de l'embout et d'autre part dans la contre-forme 40.

La contre-forme 40 présente une forme complémentaire de la partie d'extrémité 34 de la canule 33. Plus précisément, comme représenté sur la figure 4, la contre-forme 40 est délimitée sur sa face radialement interne au contact de la barrière d'étanchéité 5, par deux surfaces 44, 45 cylindriques de révolution autour de l'axe longitudinal de l'embout et reliées entre elles par une surface 46 parallèle à la surface conique 35 de la canule 33. Dans l'exemple décrit, la différence entre les diamètres des surfaces 44 et 45 correspond à deux fois l'épaisseur de la partie médiane de la canule 33. La contre-forme 40 bloque axialement, par son extrémité avant, la douille d'étanchéité 32.

La longueur de la canule est déterminée dans l'exemple de réalisation de la figure 4 de façon à conserver une distance radiale entre sa surface externe biseautée 35 et la surface interne en regard 46 de la contre-forme 40, égale à l'épaisseur de la barrière d'étanchéité.

L'insertion de la canule entre la sous-couche sacrificielle 4 et la barrière d'étanchéité 5 provoque une expansion radiale de la barrière d'étanchéité 5 et cette dernière est déviée radialement vers l'extérieur sur sa portion 47 s'étendant au contact des surfaces coniques 35 et 46 pour former un coude, encore appelé "dog leg".

La contre-forme 40 définit un rétrécissement par rapport à la partie expansée de l'extrémité avant de la barrière d'étanchéité 5 qui s'oppose au retrait de la canule 33 et bloque axialement cette dernière dans le corps 30 de l'embout, empêchant par conséquent tout déplacement axial vers l'arrière de la bague de retenue 39, donc un glissement de la sous-couche sacrificielle 4 intimement liée à la carcasse interne 3. En outre, la surface conique 46 exerce sur la barrière d'étanchéité 5 un serrage augmentant avec l'intensité des forces de traction tendant à entraîner la barrière d'étanchéité 5, conjointement avec la canule 33, vers l'arrière en éloignement du corps de l'embout, et l'on empêche efficacement de cette manière tout déplacement axial de la sous-couche sacrificielle 4 par rapport à la douille d'étanchéité 32, ce qui garantit un maintien durable de l'étanchéité entre la conduite flexible et l'embout.

En outre, grâce au blocage axial de la barrière d'étanchéité 5 entre la canule 33 et la contre-forme 40, on peut se contenter d'un taux de sertissage modéré pour la douille 32, typiquement compris entre 5 et 60% et avantageusement entre 10 et 40% selon la nature du matériau constituant la barrière d'étanchéité 5 et qui ne risque pas d'entailler, à terme, cette dernière.

Le pincement de la barrière d'étanchéité entre la canule 33 et la douille d'étanchéité 32 permet également de s'affranchir de la résistance à l'écrasement de l'extrémité de la carcasse interne 3.

On combine avantageusement les deux modes de blocage de la carcasse interne 3 qui viennent d'être décrits en référence aux figures 3 et 4.

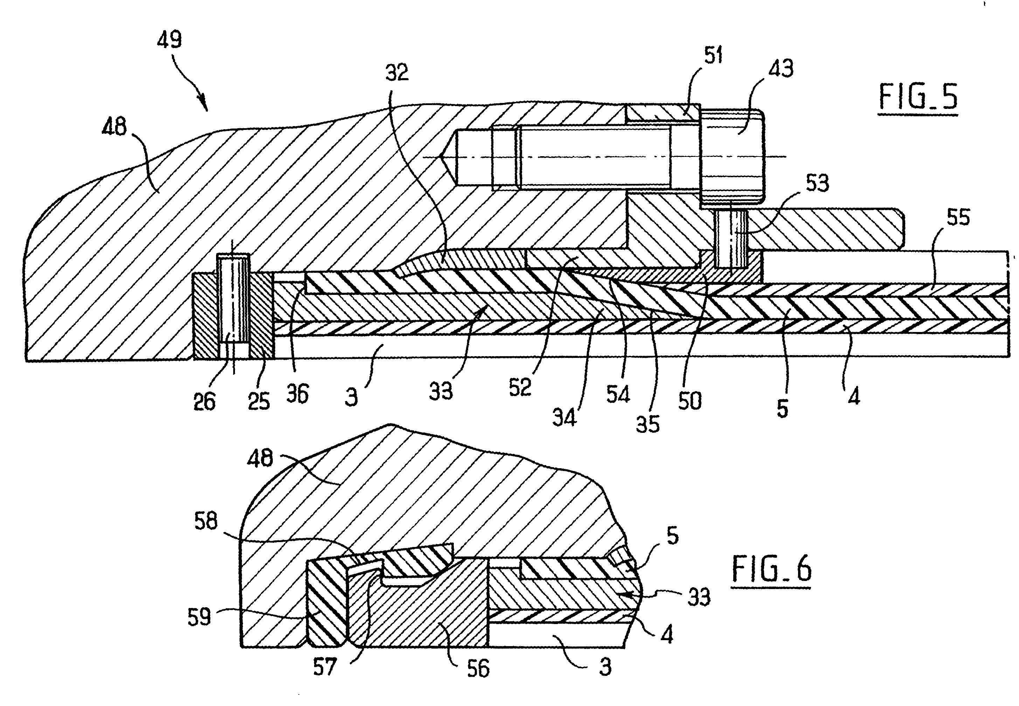

On a ainsi représenté sur la figure 5 une variante de réalisation dans laquelle la carcasse interne 3 est bloquée axialement dans le corps 48 de l'embout 49 au moyen de goujons 26, à l'instar de l'exemple de réalisation décrit en référence à la figure 3, et dans laquelle la barrière d'étanchéité 5 est pincée entre l'extrémité arrière de la canule et une contre-forme 50. Dans l'exemple de réalisation de la figure 5, la douille 32 est retenue axialement dans le corps 48 au moyen d'une pièce annulaire 51, fixée par des boulons 43 à l'arrière du corps de l'embout et servant également à maintenir la contre-forme 50.

La pièce de retenue 51 présente, à son extrémité avant, une partie tubulaire 52 qui s'emboîte dans un espace annulaire ménagé entre le corps 48 et la barrière d'étanchéité 5 et qui s'étend jusqu'à la douille 32.

La contre-forme 50 s'ajuste sur la surface radialement interne de la pièce de retenue 51. Plus précisément, la contre-forme 50 est immobilisée axialement dans l'embout 49 au moyen de goujons 53 répartis angulairement autour de l'axe longitudinal de l'embout et venant en prise chacun à une extrémité dans un perçage de la contre-forme 50 et à l'autre extrémité dans un perçage de la pièce 51.

La contre-forme 50 présente une surface, radialement interne, cylindrique de révolution, prolongée à l'avant par une surface conique 54 qui s'étend en regard de la surface conique 35 et parallèlement à cette dernière.

La barrière d'étanchéité 5 est recouverte dans l'exemple décrit par une couche 55 d'antifluage qui s'interrompt en retrait de l'extrémité avant de la barrière d'étanchéité 5.

Cette couche d'antifluage 55 est bloquée dans le corps de l'embout par des moyens connus en soi, non représentés sur la figure dans un souci de clarté du dessin.

On a représenté sur la figure 6 une variante de réalisation de l'accrochage de la bague de retenue solidaire de la carcasse interne 3 au corps 48 de l'embout. Dans cet exemple de réalisation, la bague de retenue, référencée 56, est bloquée axialement dans le corps de l'embout non plus au moyen de goujons comme cela a été décrit en référence à la figure 5, mais par coopérations de formes entre une collerette 57 formant saillie sur la surface radialement externe de la bague de retenue 56 et une gorge annulaire 58 formée sur la face radialement interne d'une couronne 59 solidaire du corps 48 de l'embout.

La couronne 59 est fixée au corps 48 de l'embout par tous moyens appropriés connus de l'homme du métier et la collerette 57 s'encliquette dans la gorge annulaire 58 lors de l'insertion de la conduite flexible dans l'embout.

Dans les exemples de réalisation qui viennent d'être décrits, on comprime avantageusement la barrière d'étanchéité 5 entre l'extrémité arrière de la canule 33 et la contre-forme 40 (réalisation correspondant à la figure 4) ou la contre-forme 50 (réalisation correspondant à la figure 5) de manière à améliorer encore le blocage axial de la canule 33. De préférence, on joue sur la longueur de la canule 33 pour obtenir le positionnement axial relatif désiré entre la canule et la contre-forme 40 ou 50 de manière à ce que le taux de compression de la barrière d'étanchéité 5, au moment de l'assemblage de la conduite et de l'embout, soit compris entre 5 et 20 %, ce taux de compression étant défini comme étant le rapport de l'épaisseur de la barrière d'étanchéité comprimée à l'épaisseur en l'absence de compression.

L'invention n'est bien entendu pas limitée aux exemples de réalisation qui viennent d'être décrits.

Dans ces derniers, on n'a pas représenté dans un souci de clarté du dessin les moyens connus en eux-mêmes (par exemple des perçages radiaux) permettant la mise en place des divers goujons de blocage de la bague de retenue solidaire de la carcasse interne. De préférence, les moyens utilisés pour la mise en place de ces goujons permettent également leur retrait dans un souci de rendre démontable l'embout de connexion.

On peut en outre, sans sortir du cadre des revendications, modifier la forme de la canule ainsi que celle de la contre-forme, conformée pour coopérer avec la canule, et réaliser le blocage axial de la carcasse interne 3 dans le corps de l'embout par tout autre moyen de fixation approprié connu de l'homme de métier.

## Revendications

1. Canalisation flexible comportant une conduite flexible (2) de transport d'hydrocarbures et un embout de connexion à l'extrémité de ladite conduite flexible, cette dernière étant du type comprenant au moins une carcasse interne (3), une sous-couche sacrificielle (4) et une barrière d'étanchéité (5), l'embout présentant un corps tubulaire dans lequel sont insérées la carcasse interne (3), la sous-couche sacrificielle (4) et la barrière d'étanchéité (5), et comportant une douille d'étanchéité comportant une surface extérieure sensiblement conique contactant de manière étanche l'intérieur de l'embout, de manière à être sertie sur la barrière d'étanchéité, et une surface interne qui vient écraser la barrière d'étanchéité lors du sertissage de manière à réaliser l'étanchéité sertie sur la barrière d'étanchéité, **caractérisée par** le fait que l'embout comporte une bague de retenue (25 ; 39 ; 56) solidaire de la carcasse interne (3) et des moyens de blocage (26 ; 33, 40 ; 26, 33, 50) s'opposant à un déplacement axial de la bague de retenue dans le sens d'un désassemblage de la conduite et de l'embout.

2. Canalisation selon la revendication 1, **caractérisée par** le fait que l'embout (29 ; 49) comporte une canule (33) à insérer par une extrémité (34) entre ladite sous-couche sacrificielle (4) et ladite barrière d'étanchéité (5) et une contre-forme (40 ; 50) solidaire de l'embout, destinée à être traversée par ladite barrière d'étanchéité et définissant par rapport à la partie de la barrière d'étanchéité engagée sur la canule un rétrécissement de section s'opposant au retrait axial de ladite partie de barrière d'étanchéité.

3. Canalisation selon la revendication 2, **caractérisée par** le fait que la contre-forme (40 ; 50) est conformée pour s'opposer au retrait axial de la canule (33) et par le fait que la canule (33) comporte une extrémité (38) opposée à la contre-forme (40 ; 50) destinée à venir en butée contre la bague de retenue (39 ; 25) pour bloquer axialement cette dernière dans l'embout.

4. Canalisation selon la revendication 2 ou 3, **caractérisée par** le fait que la position relative de la contre-forme et de la canule dans l'embout est choisie de sorte que la barrière d'étanchéité soit comprimée avec un taux de compression compris entre 5 et 20 %.

5. Canalisation selon l'une quelconque des revendications 2 à 4, **caractérisée par** le fait que la canule présente une extrémité située du côté de la conduite flexible délimitée radialement à l'extérieur par une surface (35) conique, dont l'angle au sommet est de préférence compris entre 3 et 30°.

6. Canalisation selon l'une des revendications 1 à 5, **caractérisée par** le fait que la bague de retenue (25; 56) est munie d'un logement (27; 57) ouvert vers l'extérieur et par le fait que lesdits moyens de blocage comportent un organe (26; 59) solidaire du corps de l'embout et apte à être introduit dans ledit logement pour retenir axialement ladite bague de retenue.

7. Canalisation selon l'une quelconque des revendications précédentes, **caractérisée par** le fait que le taux de sertissage de la douille d'étanchéité (32) sur ladite couche d'étanchéité est compris entre 5 et 60%, et de préférence entre 10 et 40%.

8. Embout de connexion (24; 29; 49) destiné à équiper une canalisation flexible telle que définie dans l'une quelconque des revendications précédentes.

## Claims

1. A flexible pipe comprising a flexible hose (2) for carrying hydrocarbons and a connection end termination at the end of said hose, the hose being of the type comprising at least an inner carcass (3), a sacrificial sublayer (4), and a sealing barrier (5), the end termination having a tubular body in which there are inserted the inner carcass (3), the sacrificial sublayer (4), and the sealing barrier (5), and also including a sealing bush having an approximately conical external surface contacting in sealing manner the inside of the end termination in order to be crimped onto the sealing barrier and an internal surface which crushes the sealing barrier during crimping, the flexible pipe being **characterized by** the fact that the end termination includes a retaining ring (25; 39; 56) secured to the inner carcass (3), and locking means (26; 33, 40; 26, 33, 50) opposing axial displacement of the retaining ring in the direction for disassembling the hose from the end termination.

2. A pipe according to claim 1, **characterized by** the fact that the end termination (29; 49) includes a cannula (33) for inserting via one end (34) between said sacrificial sublayer (4) and said sealing barrier (5), and a backing piece (40; 50) secured to the end termination and designed to have said sealing barrier pass therethrough, co-operating with the portion of the sealing barrier engaged on the cannula to define a narrowing of section that opposes axial withdrawal of said portion of the sealing barrier.

3. A pipe according to claim 2, **characterized by** the fact that the backing piece (40; 50) is shaped to oppose axial withdrawal of the cannula (33), and by the fact that the cannula (33) has an end (38) remote from the backing piece (40; 50) designed to come into abutment against the retaining ring (39; 25) to lock the retaining ring axially in the end termination.

4. A pipe according to claim 2 or 3, **characterized by** the fact that the relative position of the backing piece and of the cannula in the end termination is selected so that the sealing barrier is compressed with a compression ratio lying in the range 5% to 20%.

5. A pipe according to any one of claims 2 to 4, **characterized by** the fact that the cannula has an end situated adjacent to the hose that is defined radially on the outside by a conical surface (35) whose angle at the apex preferably lies in the range 3° to 30°.

6. A pipe according to any one of claims 1 to 5, **characterized by** the fact that the retaining ring (25; 56) is provided with an outwardly open housing (27; 57) and by the fact that the said locking means include a member (26; 59) secured to the body of the end termination and suitable for being inserted in said housing to retain said retaining ring axially.

7. A pipe according to any preceding claim, **characterized by** the fact that the crimping ratio of the sealing bush (32) on said sealing layer lies in the range 5 % to 60%, and preferably lies in the range 10% to 40%.

8. A connection end termination (24; 29; 49) for fitting to a pipe as defined in any preceding claim.

## Patentansprüche

1. Flexible Rohrleitung mit einer flexiblen Leitung (2) zum Transportieren von Kohlenwasserstoffen und einem Verbindungsansatz am Ende der flexiblen Leitung, wobei die Leitung von dem Typ ist, der mindestens eine innere Karkasse (3), eine opferbare Unterschicht (4) und eine Dichtungssperre (5) aufweist, wobei der Ansatz einen rohrförmigen Körper, in den die innere Karkasse (3), die opferbare Unterschicht (4) und die Dichtungssperre (5) eingesetzt sind, und eine Dichtungshülse aufweist, die eine stark konische Außenfläche hat, welche dichtend an der Innenseite des Ansatzes anliegt, wobei sie auf die Dichtungssperre gecrimpt ist, sowie eine Innenfläche, welche die Dichtungssperre beim Crimpen quetscht, um die auf die Dichtungssperre gecrimpte Dichtung zu bilden, **dadurch gekennzeichnet, daß** der Ansatz eine fest mit der inneren Karkasse (3) verbundene Rückhaltemuffe (25; 39; 56) und Blockiereinrichtungen (26; 33, 40; 26, 33, 50) aufweist, die einer axialen Verschiebung der Rückhaltemuffe in Demontagerichtung von Leitung und Ansatz entgegenwirken.

2. Rohrleitung nach Anspruch 1, **dadurch gekennzeichnet, daß** der Ansatz (29; 49) eine Kanüle (33), die mit einem Ende (34) zwischen die opferbare Unterschicht (4) und die Dichtungssperre (5) eingeführt wird, und eine fest mit dem Ansatz verbundene Gegenform (40; 50) aufweist, durch welche sich die Dichtungssperre erstreckt und welche in bezug auf den auf der Kanüle befindlichen Teil der Dichtungssperre eine Querschnittsverengung bildet, die dem axialen Zurückziehen des Teils der Dichtungssperre entgegenwirkt.

3. Rohrleitung nach Anspruch 2, **dadurch gekennzeichnet, daß** die Gegenform (40; 50) derart ausgebildet ist, daß sie dem axialen Zurückziehen der Kanüle (33) entgegenwirkt, und daß die Kanüle (33) ein der Gegenform (40; 50) abgewandtes Ende (38) aufweist, das zurAnlage an der Rückhaltemuffe (39; 25) vorgesehen ist, um diese axial in dem Ansatz zu blockieren.

4. Rohrleitung nach Anspruch 2 oder 3, **dadurch gekennzeichnet, daß** die relative Position der Gegenform und der Kanüle in dem Ansatz derart gewählt ist, daß die Dichtungssperre mit einem Kompressionswert zwischen 5 und 20% zusammengedrückt wird.

5. Rohrleitung nach einem der Ansprüche 2 bis 4, **dadurch gekennzeichnet, daß** die Kanäle ein auf der Seite der flexiblen Rohrleitung befindliches Ende aufweist, das auf der Außenseite radial durch eine konische Fläche (35) begrenzt ist, deren Scheitelwinkel yorzugsweise zwischen 3 und 30° liegt.

6. Rohrleitung nach einem der Ansprüche 1 bis 5, **dadurch gekennzeichnet, daß** die Rückhaltemuffe (25; 56) mit einer Aufnahme (27; 57) versehen ist, die nach außen offen ist, und daß die Blockiereinrichtungen ein Element (26; 59) aufweisen, das mit dem Körper des Ansatzes fest verbunden ist und in die Aufnahme einführbar ist, um die Rückhaltemuffe axial zurückzuhalten.

7. Rohrleitung nach einem der vorhergehenden Ansprüche, **dadurch gekennzeichnet, daß** der Crimpgrad der Dichtungshülse (32) auf die Dichtungsschicht zwischen 5 und 60%, vorzugsweise zwischen 10 und 40% beträgt.

8. Verbindungsansatz (24; 29; 29) zum Ausrüsten einer flexiblen Rohrleitung gemäß einem der vorhergehenden Ansprüche.
